# EUROPEAN PATENT SPECIFICATION

(11) **EP 1 780 652 B1**
(45) Date of publication and mention of the grant of the patent: **10.08.2011**
(21) Application number: 05110194.7
(22) Date of filing: 31.10.2005
(51) Int. Cl.: G06F 21/24

(54) **Data processing system and method**
System und Verfahren zur Datenverarbeitung
Système et procédé de traitement de données

(43) Date of publication of application: 02.05.2007
(73) Proprietor: SAP AG, 69190 Walldorf (DE)
(72) Inventor: Klein, Udo, 76744, Maximiliansau (DE)
(74) Representative: Richardt Patentanwälte

(56) References cited:
- EP-A- 1 536 309
- WO-A1-03/036481
- CA-A1- 2 279 119
- TZONELIH HWANG ET AL: "Yet another efficient access control for user hierarchy" SECURITY TECHNOLOGY, 1995. PROCEEDINGS. INSTITUTE OF ELECTRICAL AND ELECTRONICS ENGINEERS 29TH ANNUAL 1995 INTERNATIONAL CARNAHAN CONFERENCE ON SANDERSTEAD, UK 18-20 OCT. 1995, NEW YORK, NY, USA,IEEE, US, 18 October 1995 (1995-10-18), pages 496-501, XP010196377 ISBN: 0-7803-2627-X
- P. K. MURTHY AND S. BHATTACHARYYA: "Shared buffer implementations of signal processing systems using lifetime analysis techniques" IEEE TRANSACTIONS ON ON COMPUTER AIDED DESIGN OF INTEGRATED CIRCUITS AND SYSTEMS, vol. 20, no. 2, February 2001 (2001-02), pages 177-198, XP002367926
- BENDER M A ET AL: "THE LCA PROBLEM REVISITED" LECTURE NOTES IN COMPUTER SCIENCE, SPRINGER VERLAG, NEW YORK, NY, US, vol. 1776, April 2000 (2000-04), pages 88-94, XP009071369 ISSN: 0302-9743
- HAREL D ET AL: "FAST ALGORITHMS FOR FINDING NEAREST COMMON ANCESTORS" SIAM JOURNAL ON COMPUTING, SOCIETY FOR INDUSTRIAL AND APPLIED MATHEMATICS, US, vol. 13, no. 2, May 1984 (1984-05), pages 338-355, XP009071372 ISSN: 0097-5397
- R COLE AND R HARIHARAN: "Dynamic LCA queries on trees" SIAM J. COMPUT., vol. 34, no. 4, 12 May 2005 (2005-05-12), pages 894-923, XP002397937
- SATTLER K-U ET AL: "Autonomous query-driven index tuning" DATABASE ENGINEERING AND APPLICATIONS SYMPOSIUM, 2004. IDEAS '04. PROCEEDINGS. INTERNATIONAL COIMBRA, PORTUGAL JULY 7-9, 2004, PISCATAWAY, NJ, USA,IEEE, 7 July 2004 (2004-07-07), pages 439-448, XP010713983 ISBN: 0-7695-2168-1

## Description

### FIELD OF THE INVENTION

The present invention relates to the field of data processing, and more particularly without limitation to the field of user authorization.

### BACKGROUND OF THE INVENTION

A user's right to read and/or write specific data objects stored in a data processing system is usually specified in his or her user profile. Manual maintenance of such user profiles is a tedious and error prone task. If an organizational structure of a company changes, the respective user authorizations as specified in the user profiles need to be changed correspondingly. This may require a manual update of a large number of user profiles that are afflicted by the organizational change.

Structural user authorization is a concept that aims to reduce this drawback. SAP's authorization system as implemented in SAP R/3 has such a structural authorization concept as described in SAP Authorization System - Design and Implementation of Authorization concepts for SAP R/3 and SAP Enterprise Portals of IBM Business Consulting GmbH, SAP Press, especially chapter 2.3.5, page 52.

In 'Yet Another Efficient Access Control for User Hierarchy', T.Hwang and N.Lee,Security Technology, 1995, Proceedings IEEE 29th Annual International Camahan Conference 18-20 October 1995, IEEE, New York, NY, US, pages 496-501 access control systems are disclosed. The incorporation of the relationships between users in a hierarchy are included in the access control system. The use of least common ancestor calculations to determine these relationships is disclosed.

The determination of the least common ancestor of the first and second nodes in the graph can be performed using any known algorithm for finding such ancestors, such as Dov Harel , Robert Endre Tarjan, Fast algorithms for finding nearest common ancestors, SIAM Journal on Computing, v.13 n.2, p.338-355, May 1984.

Preferably, an algorithm is used for determining the least common ancestor that reduces the least common ancestor problem to the range minimum query problem; such an algorithm is described e.g. in M. A. Bender and M. Farach-Colton, The LCA problem revisited. In Latin American Theoretical Informatics, pages 88-94, Apr. 2000; and Michael Bender and M. Farach-Colton, The 9 LCA problem revisited. In Latin American Theoretical Informatics, pages 88-94, Punta del Este, Uruguay, 10-14 April 2000. For example, the sparse table algorithm for the range minimum query problem as described in the Bender, Farach-Colton references is used for determining the least common ancestor of the first and second nodes.

### SUMMARY OF THE INVENTION

In accordance with the present invention there is provided a data processing system as defined in independent claim 1.

Another aspect of the invention is a method as defined in independent claim 7. Further embodiments of the invention are specified in the dependent claims.

Embodiments of the present invention are particularly advantageous as the time and effort required for updating user profile information regarding user authorizations can be drastically reduced while the processing load for performing authorization checks is minimized. Further, it is ensured that authorization checks are performed on the basis of relatively up to date tree information whereby the acceptable time interval during which an outdated LCA index can still be used is selectable.

In still another aspect the present invention relates to a computer program product for performing a method in accordance with the present invention. The computer program can be executed by an application server that generates the LCA indices on the basis of tree information stored in a database server.

### BRIEF DESCRIPTION OF THE DRAWINGS

In the following embodiments of the invention are described by way of example only making reference to the drawings in which:
- Figure 1: is a block diagram of an embodiment of a data processing system of the invention,
- Figure 2: is a flowchart illustrating an embodiment of a method of the invention,
- Figure 3: shows an example of a tree,
- Figure 4: is a block diagram of a further preferred embodiment of a data processing system of the invention,
- Figure 5: is a flowchart illustrating a further preferred embodiment of a method of the invention,
- Figure 6: is a flowchart illustrating a further preferred embodiment of a method of the invention.

### DETAILED DESCRIPTION

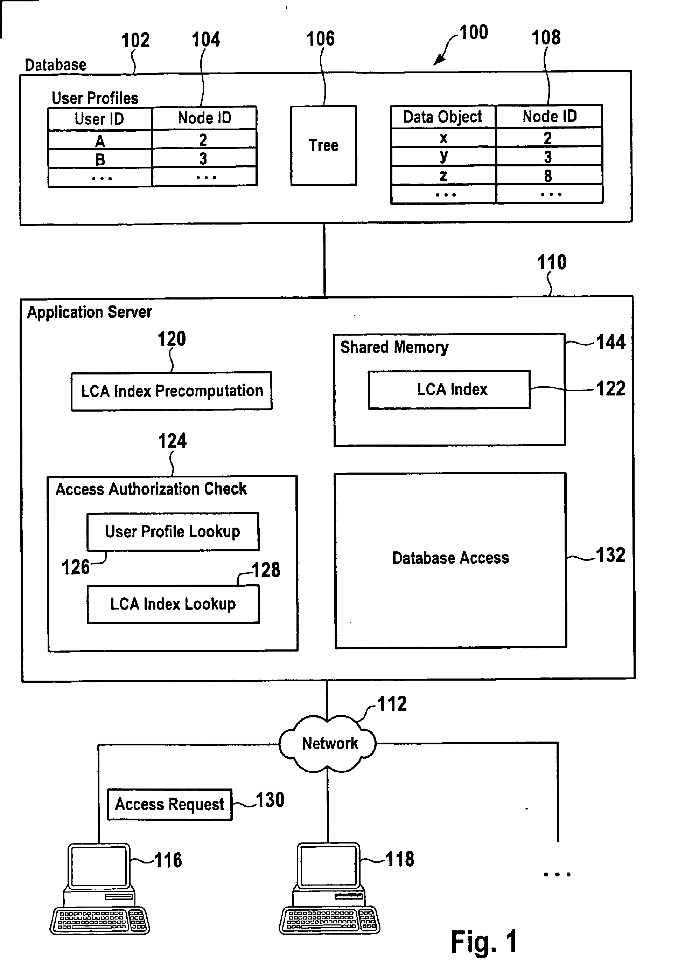

Fig. 1 shows a data processing system 100 that has at least one database server 102 for storing user profiles 104, one or more database tables 106 for storing data descriptive of the nodes and vertices of at least one directed acyclic graph, such as a tree, and data objects 108, such as data files or other data structures.

Each node of the tree is identified by a node identifier (ID) in the database table 106. The user profiles 104 reference these node IDs. For example, the user having user identifier (ID) 'A' is assigned to the node ID '2' whereas the user having user ID 'B' is assigned to the node having node ID '3', etc. The assignment of users to nodes of the tree specifies authorization levels of the users. It is to be noted that typically a single assignment of a node ID per tree is sufficient to specify a user's authorization level.

The data objects 108 also reference node IDs of the tree. A user that is assigned to a specific node of the tree is allowed access to all data objects that are assigned to that node and all data objects assigned to lower tree nodes below the node specified for that user in its user profile.

An application server 110 is coupled to the database server 102. The application server 110 and the database server 102 can be closely or loosely coupled via the network 112.

The application server 110 has a shared memory 114 for multiple client computers 116, 118,... coupled to the application server 110 by means of the network 112.

The application server 110 can execute program instructions 120 for pre-computation of an LCA index 122. The pre-computed LCA index 122 is stored in the shared memory 114.

The LCA index pre-computation can be performed by means of any suitable LCA index pre-computation algorithm; preferably the LCA index is calculated as one or more look up tables or a sparse table in accordance with one or more of the algorithms disclosed in the above cited Bender, Farach-Colton references.

For the pre-computation of the LCA index the application server can access the required tree information stored in the database table 106.

Further, the application server 110 has program instructions 124 for performing an access authorization check. The program instructions 124 comprise program instructions 126 for reading user profile information from the user profiles 104, i.e. the node ID that is assigned to a given user, and program instruction 128 for performing a look up operation of the LCA index 122 using the node ID obtained from the user profiles 104 and the node ID of another node of the tree that is specified in an access request 130 received from one of the client computers 116, 118,...

The application server 110 has program instructions 132 for performing database access operations for reading data from the database server 102.

In operation, the application server 110 executes the program instructions 120 for computation of the LCA index 122. The LCA index 122 is stored in the shared memory 114. The program instructions 120 are invoked automatically such as by the instructions 132 if a modification of the tree is entered into the database table 106.

In the following it is assumed without restriction of generality that the user A is logged on on the client computer 116 and the user B is logged on on the client computer 118.

The access request 130 that is initiated by the user A identifies that user A and a data object to which the user A requests read and/or write access. The specification of the data object can be explicit such as by including access path information to that data object in the access request 130. Alternatively or in addition the node ID to which the data object of interest is assigned is indicated in the access request 130.

Receipt of the access request 130 by the application server 110 invokes execution of the program instructions 124. The program instructions 126 perform a look up operation of the user profiles 104 in order to read the node ID that is assigned to the user ID given in the access request 130.

If the access request 130 does not directly specify a node ID of the tree to which access is requested but one of the data objects 108, the node ID that is assigned to that data object 108 is read from the database server 102 in addition. Next, the program instructions 128 are invoked in order to look up the LCA index 122 using the node ID assigned to the user ID specified in the access request 130 and the node ID assigned to the data object 108 to which access is requested. If the result of the LCA index look up is that the least common ancestor of the node that is assigned to the specified user and the node that is assigned to the data object 108 of interest is the node that is assigned to the specified user, authorization is granted for the access request 130 and the requested read and/or write access operation is executed by the program instructions 132. If the contrary is the case, the access request 130 is rejected.

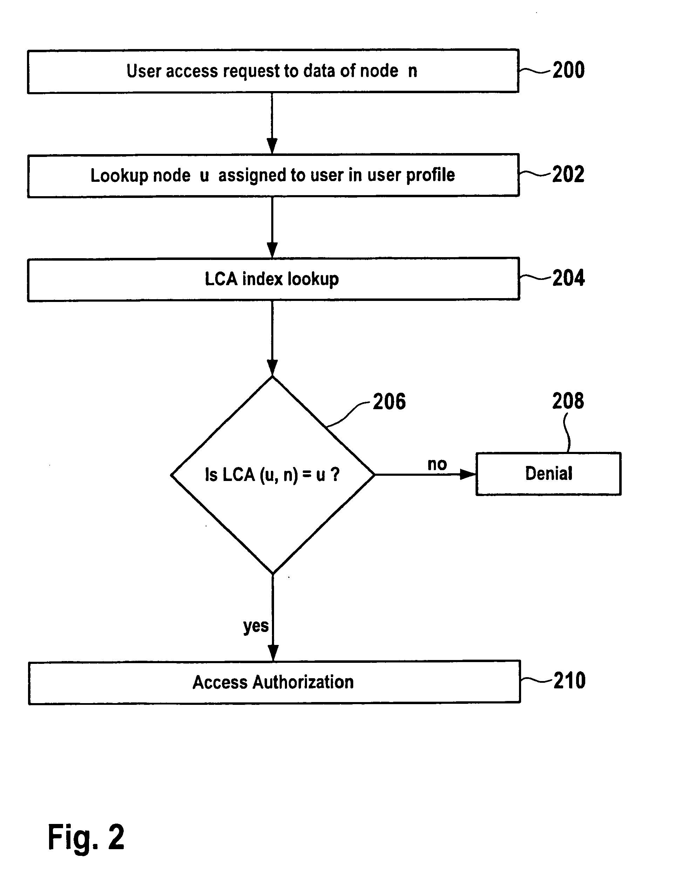

Fig. 2 shows a flowchart illustrating an embodiment of a method of the invention. In step 200 an access request is received from one of the users. The access request directly or indirectly specifies the node n of a tree to which the data of interest is assigned. In step 202 the node u to which the requesting user is assigned is looked up from the user profile of that user. That node u assigned to the user specifies that user's level of access authorization.

In step 204 an LCA index look up is performed for the nodes n and u. The table entries obtained for the nodes n and u from the LCA index are evaluated in step 206 in order to determine whether the least common ancestor of the nodes u and n is the node u. If this is not the case, access is denied in step 208. If this condition is fulfilled, access is authorized in step 210.

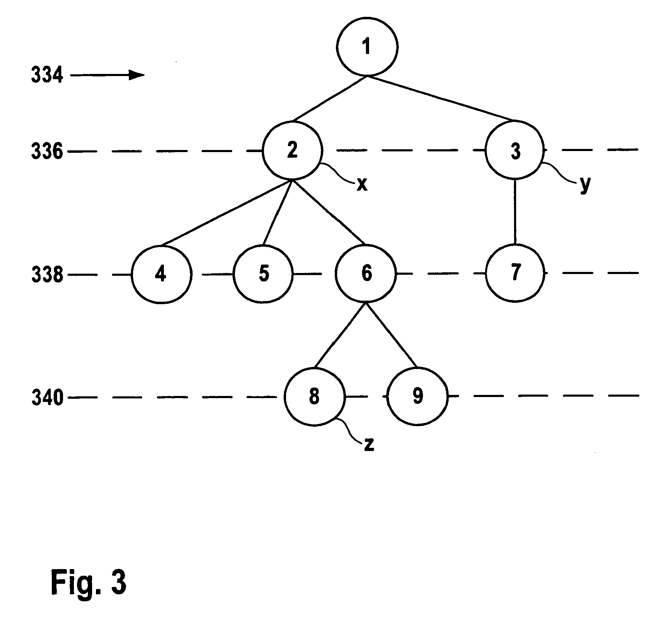

Fig. 3 shows an exemplary tree 334. The tree 334 has a root with node ID '1' and three tree levels 336, 338 and 340. The three level 336 has the child nodes with node IDs 2 and 3 of the root node 1. Tree level 338 has child nodes 4, 5 and 6 of node 2 and child node 7 of node 3. Tree level 340 has child nodes 8 and 9 of node 6.

In the exemplary user profile 104 of Fig. 1 the user A is assigned to node 2. This means that the user A has access rights with respect to data objects being assigned to the node 2 and all nodes below the node 2, i.e. nodes that are connected to the node 2 and that are on lower tree levels 338 and 340. These are the nodes 4, 5, 6, 8 and 9 in the example considered here. Likewise node 3 is assigned to the user B such that user B has access rights to data objects assigned to the node 3 and nodes below the node 3, i.e. node 7.

For example, the user A has access rights to the data object x that is assigned to the node 2 as well as to data object z that is assigned to node 8 as node 8 is on a lower tree level, i.e. tree level 340, and there is a tree path from node 2 to node 8. However, the user A has no access rights to the data object y as this is assigned to the node 3 and node 3 is on the same tree level 336 as node 2. In other words the least common ancestor of the nodes 2 and 3 is not node 2 but node 1 such that the respective condition is not fulfilled and no access can be granted to the user A for access to the data object y.

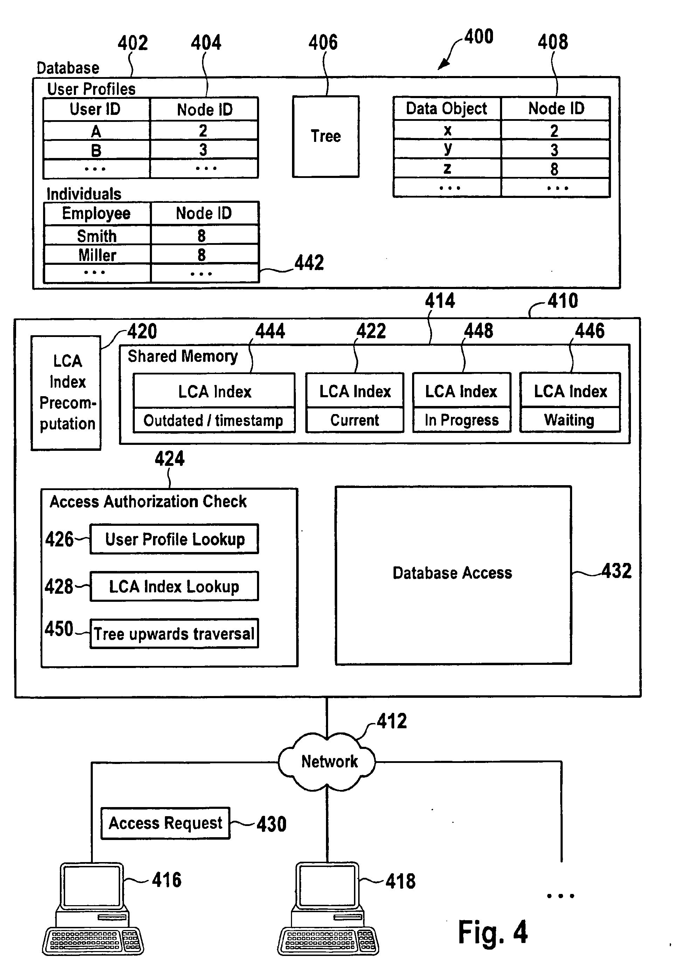

Fig. 4 shows a block diagram of an alternative embodiment of a data processing system of the invention. Elements in the embodiment of Fig. 4 that correspond to elements of the embodiment of Fig. 1 are designated by like reference numerals.

In the embodiment of Fig. 4 the database server 402 has an additional mapping table 442 that maps individuals, such as employees, to nodes of the tree, e.g. tree 334, as stored in database table 406. This has the advantage that the tree 334 does not need to go down to the employee level but only covers the organizational structure of the company including all organizational entities except individual employees and/or individual jobs of an organizational entity. This has the advantage that the pre-computed LCA index 422 does not need to be re-computed each time an employee fluctuation occurs and/or if new jobs are defined or abolished within one of the organizational entities modelled by the tree 334. As changes in the organizational structure of a company occur relatively infrequently respective recalculations of the LCA index 422 are also relatively infrequent.

In the example considered here employee 'Smith' and employee 'Miller' are assigned to node 8 of the tree 334. For example, the data object z that is also assigned to node 8 is the personnel record of employee 'Smith'.

The LCA index 422 has a first status 'current'. This means that the LCA index 422 is currently to be used for authorization checks. In addition or alternatively an LCA index 444 is stored in the shared memory 414. The LCA index 444 has a second status 'outdated' and a time stamp. The time stamp indicates when the LCA index 444 transitioned from the first status 'current' to its present second status 'outdated'. The LCA index 444 can be used for current authorization checks if the LCA index 422 is not available and if the LCA index 442 is not too old, e.g. if a predetermined first time interval from the time stamp has not lapsed.

The shared memory 414 can also hold an instance 446 of a new LCA index yet to be computed. The instance 446 has a third status 'waiting'. This means that the pre-computation of the new LCA index is delayed for a second time interval from the creation of the instance 446.

The shared memory 414 can also hold an instance 448 for the pre-computation of a new LCA index. The instance 448 has a fourth status 'in progress'. This status indicates that the new LCA index is being pre-computed after the second time interval has lapsed.

The instructions 424 comprise additional instructions 450 for performing the authorization check using an alternative method that does not require an LCA index. The instructions 450 are executed if an authorization check needs to be performed at a time when no current and no outdated LCA index for which the first time interval did not yet lapse is available.

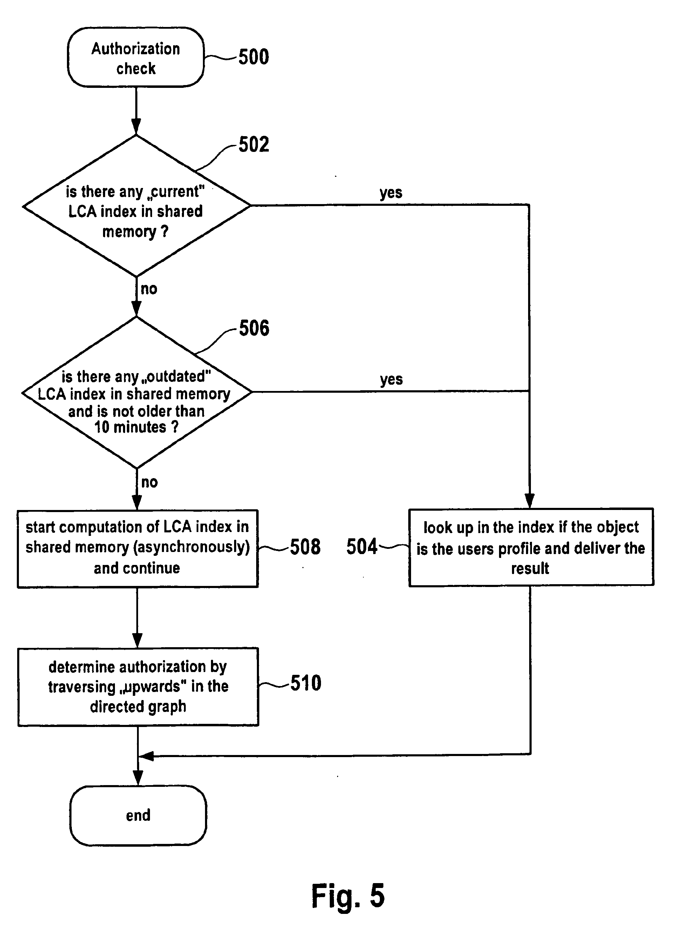

Fig. 5 shows a flowchart illustrating the status dependent use of the LCA indices 422 and 444 of Fig. 4. In step 500 an authorization check is initiated when the access request 430 is received by the application server 410. In step 502 a determination is made whether an LCA index having the first 'current' status is available in the shared memory 414 (cf. LCA index 422). If this is the case step 504 is executed in which the LCA index 422 is used to perform the authorization check. This can be implemented in accordance with the steps 202 to 210 of Fig. 2.

If there is no LCA index 422 in the shared memory the control goes to step 506. This situation occurs when a tree update had been entered into the database table 406 such that the current LCA index transitioned to outdated.

In step 506 a determination is made whether an LCA index having the second status is in the shared memory and if so whether the second time interval of that LCA index has already expired or not (cf. LCA index 444 of Fig. 4). If the LCA index 444 is available in the shared memory 414 and if the second time interval has not yet expired the control goes to step 504. In other words, the outdated LCA index 444 is used to perform the authorization check as only a negligible amount of time expired from its transition from the first to the second status. The choice of the second time interval is a matter of choice and depends on the particular application. For example, the second time interval can be between 5 to 15 minutes, such as 10 minutes.

If there is no LCA index 444 or if the second time interval has lapsed, the control goes to step 508. In step 508 a re-computation of a new LCA index is initiated. Preferably, the pre-computation of the LCA index is performed asynchronously such that the subsequent step 510 can be carried out immediately after initialization of the pre-computation of the new LCA index in step 508.

In step 510 the instructions 450 (cf. Fig. 4) are invoked in order to perform the authorization check without an LCA index. For example, the authorization check is performed by upwards traversal of the directed graph, e.g. the tree 334.

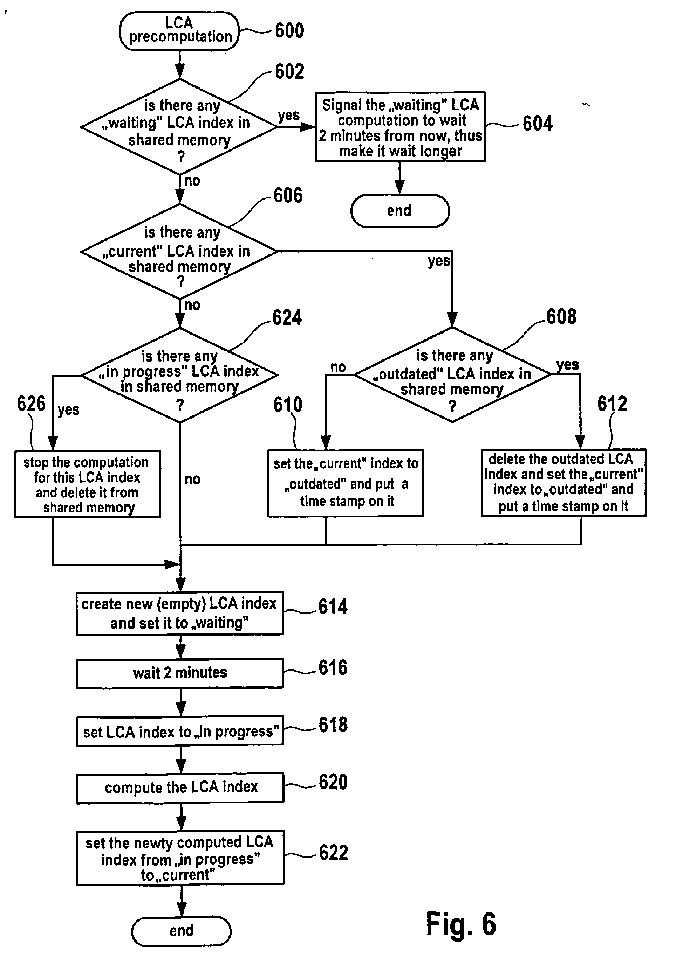

Fig. 6 illustrates a mode of operation of the program instructions 420 (cf. Fig. 4) for the LCA index pre-computation. In step 600 the program instructions 420 are invoked. This can be due to the initialization of the LCA pre-computation in step 508 (cf. Fig. 5). In step 602 a determination is made whether there is an LCA index 446 in the shared memory 414. If this is the case the control goes to step 604.

In step 604 the second time interval is incremented for a period of time that is shorter than the first time interval. For example, if the first time interval is 10 minutes, 2 minutes can be a convenient choice for the increment of the second time interval. The pre-computation of the new LCA index is executed after the incremented second time interval has lapsed.

If there is no LCA index 446 in the shared memory 440 a determination is made in step 606 if there is an LCA index 422 in the shared memory. If this is the case the control goes to step 608 where a determination is made if there is an LCA index 444 in the shared memory. If this is the case the LCA index 422 transitions from its first status to the second status and is time stamped in order to become the LCA index 444 (step 610). If it is determined in step 608 that there is in fact the LCA index 444 in shared memory 414, the LCA index 444 is deleted and the status transition of the LCA index 422 is executed from its first status to the second status such that the LCA index 422 replaces the former LCA index 444. (step 612).

From steps 610 or 612 the control goes to step 614 where the instance 446 for a new LCA index is generated. After the second time interval has lapsed (step 616) the LCA index 446 is transitions to instance 448 and the new LCA index is computed in step 620; after completion of the new LCA index, the instance 448 transitions to become the new LCA index 422 (step 622).

If a determination is made in step 606 that there is no LCA index 444 in shared memory the control goes to step 624. In step 624 a determination is made whether there is an instance 448 in the shared memory 414. If this is the case the control goes to step 626 where the ongoing pre-computation of the LCA index with respect to the existing instance 448 is stopped and the instance 448 is deleted. From there the control goes to step 614. If a determination is made in step 624 that there is no instance 448 in the shared memory 414, the control directly goes to step 614.

### List of Reference Numerals

| | |
|---|---|
| 100 | Data processing system |
| 102 | Database server |
| 104 | User profiles |
| 106 | Database table |
| 108 | Data objects |
| 110 | Application server |
| 112 | Network |
| 114 | Shared memory |
| 116 | Client computer |
| 118 | Client computer |
| 120 | Program instructions |
| 122 | LCA index |
| 124 | Program instructions |
| 126 | Program instructions |
| 128 | Program instructions |
| 130 | Access request |
| 132 | Program instructions |
| 334 | Tree |
| 336 | Tree level |
| 338 | Tree level |
| 340 | Tree level |
| 400 | Data processing system |
| 402 | Database server |
| 404 | User profiles |
| 406 | Database table |
| 408 | Data objects |
| 410 | Application server |
| 412 | Network |
| 414 | Shared memory |
| 416 | Client computer |
| 418 | Client computer |
| 420 | Program instructions |
| 422 | LCA index |
| 424 | Program instructions |
| 426 | Program instructions |
| 428 | Program instructions |
| 430 | Access request |
| 432 | Program instructions |
| 442 | Mapping table |
| 444 | LCA index |
| 446 | Instance |
| 448 | Instance |
| 450 | Instructions |

## Claims

1. A data processing system comprising:
- first storage means (102; 402) for storing first data (106; 406) descriptive of at least one directed acyclic graph (334) and for storing second data (104; 404) descriptive of an assignment of a user to a first node of the graph,
- second storage means (114; 414) for storing a pre-computed least common ancestor index (122; 422, 444, 446, 448) of the graph,
- means (110; 410) for receiving an access request (130; 430) of the user, the access request specifying a second node of the graph,
- means (120, 122, 124; 420, 422, 424, 444, 446, 448, 450) for determining a least common ancestor of the first and second nodes of the graph,
- means (124; 424) for performing an authorization check being adapted to grant authorization for the access request if the least common ancestor of the first and second nodes is the first node,
wherein the data processing system is further adapted for:
the pre-computation of the least common ancestor index is initiated in response to entry of a modification of the graph into the first data, wherein the least common ancestor index has a first status (422) or a second status and a time stamp (444), wherein the least common ancestor index is used for determining the least common ancestor of the first and second nodes if it has the first status, otherwise when the least common ancestor index having the first status is not available the least common ancestor index having the second status is used, if available, and if it is not older than a predefined first time interval, otherwise an instance (446, 448) of a new least common ancestor index is generated for initialization of the pre-computation of the new least common ancestor index, wherein the least common ancestor of the first and second nodes is determined by an upwards traversal (450) of the graph until the pre-computation of the new least common ancestor index is completed, the method further comprising assigning a third status to the instance (446) and starting the pre-computation after a predetermined second time interval from the generation of the instance and replacing the third status by a fourth status (448) after the second time interval has lapsed,
wherein:
- if the instance (446) has been generated and if the instance has the third status, incrementing the second time interval in response to a request for an least common ancestor index pre-computation,
- else, if a least common ancestor index (422) having the first status is stored in shared memory (414), performing a status transition from the first status to the second status and time stamping the least common ancestor index (444),
- else, if the instance (448) has been generated and if the instance has the fourth status, aborting the pre-computation for the new least common ancestor index of this instance (448) and delete this instance from shared memory,
- else, generate a new instance (446) for computation of the new least common ancestor index, the new instance having the third status, transitioning the status of the instance from the third status to the fourth status after the second time interval has lapsed and starting the pre-computation of the new least common ancestor index, transitioning the status of the least common ancestor index after completion of the pre-computation from the fourth status to the first status such that the instance becomes the new least common ancestor index (422) having the first status.

2. The data processing system of claim 1, the second storage means being shared memory.

3. The data processing system of claim 1 or 2 further comprising means for computation (120; 420) of a least common ancestor index (122; 422, 444, 446, 448), the means for determining a least common ancestor being adapted to use the least common ancestor index.

4. The data processing system of any one of the preceding claims, wherein the graph comprises nodes (1, 2, 3, 4, 5, 6, 7, 8, 9) being representative of organizational entities.

5. The data processing system of any one of the preceding claims, further comprising third data (442) descriptive of an assignment of an individual to the second node of the graph, the access request being indicative of the individual for specification of the second node.

6. The data processing system of any one of the preceding claims, the graph being a tree.

7. A method of performing an authorization check for a user, the user being assigned to a first node of a directed acyclic graph (334), the method comprising:
- pre-computing a least common ancestor index (122; 422, 444, 446, 448)
- receiving an access request (130; 430) from the user, the access request specifying a second node of the graph,
- determining a least common ancestor of the first and second nodes using the pre-computed least common ancestor index,
- granting authorization if the least common ancestor of the first and second nodes is the first node,
wherein the pre-computation of the least common ancestor index is initiated in response to entry of a modification of the graph into the first data, wherein the least common ancestor index has a first status (422) or a second status and a time stamp (444), wherein the least common ancestor index is used for determining the least common ancestor of the first and second nodes if it has the first status, otherwise when the least common ancestor index having the first status is not available the least common ancestor index having the second status is used, if available, and if it is not older than a predefined first time interval, otherwise an instance (446, 448) of a new least common ancestor index is generated for initialization of the pre-computation of the new least common ancestor index, wherein the least common ancestor of the first and second nodes is determined by an upwards traversal (450) of the graph until the pre-computation of the new least common ancestor index is completed, the method further comprising assigning a third status to the instance (446) and starting the pre-computation after a predetermined second time interval from the generation of the instance and replacing the third status by a fourth status (448) after the second time interval has lapsed,
the method further comprising:
- if the instance (446) has been generated and if the instance has the third status, incrementing the second time interval in response to a request for an least common ancestor index pre-computation,
- else, if a least common ancestor index (422) having the first status is stored in shared memory (414), performing a status transition from the first status to the second status and time stamping the least common ancestor index (444),
- else, if the instance (448) has been generated and if the instance has the fourth status, aborting the pre-computation for the new least common ancestor index of this instance (448) and delete this instance from shared memory,
- else, generate a new instance (446) for computation of the new least common ancestor index, the new instance having the third status, transitioning the status of the instance from the third status to the fourth status after the second time interval has lapsed and starting the pre-computation of the new least common ancestor index, transitioning the status of the least common ancestor index after completion of the pre-computation from the fourth status to the first status such that the instance becomes the new least common ancestor index (422) having the first status.

8. The method of claim 7, the graph comprising nodes being representative of organizational entities.

9. The method of claim 7 or 8, the access request indicating one of a plurality of individuals, further comprising determining the second node using a predefined assignment (442) of the one of the individuals to the second node.

10. The method of claims 7, 8 or 9, wherein the pre-computation of the least common ancestor index is initiated in response to the access request.

11. The method of any one of the preceding claims 7 to 10, wherein pre-computation of a new least common ancestor index (422) is initiated due to entry of a change of the graph, and wherein an outdated pre-computed least common ancestor index (444) is continued to be used for the determination of the least common ancestor of the first and second nodes during a first time interval, and wherein an instance for pre-computation of the new least common ancestor index is generated, wherein pre-computation of the new least common ancestor index is started after a second time interval has lapsed from the creation of the instance.

12. The method of claim 11, wherein entry of a subsequent entry of a change of the graph within the first time interval causes an increase of the second time interval.

13. A computer program product comprising computer executable instructions for performing a method in accordance with any one of the preceding claims 7 to 12.

## Patentansprüche

1. Datenverarbeitungssystem, umfassend:
- erste Speichermittel (102; 402) zum Speichern von ersten Daten (106; 406), die mindestens einen gerichteten azyklischen Graphen (334) beschreiben, und zum Speichern von zweiten Daten (104; 404), die eine Vergabe eines Benutzers an einen ersten Knoten des Graphen beschreiben,
- zweite Speichermittel (114; 414) zum Speichern eines vorberechneten Index (122; 422, 444, 446, 448) des kleinsten gemeinsamen Vorfahren des Graphen,
- Mittel (110; 410) zum Empfangen einer Zugangsanforderung (130; 430) des Benutzers, wobei die Zugangsanforderung einen zweiten Knoten des Graphen spezifiziert,
- Mittel (120, 122, 124; 420, 422, 424, 444, 446, 448, 450) zum Bestimmen eines kleinsten gemeinsamen Vorfahren des ersten,und zweiten Knotens des Graphen,
- Mittel (124; 424) zum Durchführen einer Autorisierungsprüfung, die dafür ausgelegt sind, Autorisierung für die Zugangsanforderung zu gewähren, wenn der kleinste gemeinsame Vorfahre des ersten und zweiten Knotens der erste Knoten ist,
wobei das Datenverarbeitungssystem ferner für Folgendes ausgelegt ist:
die Vorberechnung des Index des kleinsten gemeinsamen Vorfahren wird als Reaktion auf Eintrag einer Modifikation des Graphen in die ersten Daten eingeleitet, wobei der Index des kleinsten gemeinsamen Vorfahren einen ersten Status (422) oder einen zweiten Status und einen Zeitstempel (444) aufweist, wobei der Index des kleinsten gemeinsamen Vorfahren verwendet wird, um den kleinsten gemeinsamen Vorfahren des ersten und zweiten Knotens zu bestimmen, wenn er den ersten Status aufweist, wobei andernfalls, wenn der Index des kleinsten gemeinsamen Vorfahren, der den ersten Status aufweist, nicht verfügbar ist, der Index des kleinsten gemeinsamen Vorfahren, der den zweiten Status aufweist, verwendet wird, wenn er verfügbar ist und wenn er nicht älter als ein vordefiniertes erstes Zeitintervall ist, wobei andernfalls eine Instanz (446, 448) eines neuen Index des kleinsten gemeinsamen Vorfahren zur Initialisierung der Vorberechnung des neuen Index des kleinsten gemeinsamen Vorfahren erzeugt wird, wobei der kleinste gemeinsame Vorfahre des ersten und zweiten Knotens durch eine Aufwärtsdurchquerung (450) des Graphen, bis die Vorberechnung des neuen Index des kleinsten gemeinsamen Vorfahren abgeschlossen ist, bestimmt wird, wobei das Verfahren ferner das Vergeben eines dritten Status an die Instanz (446) und das Starten der Vorberechnung nach einem vorbestimmten zweiten Zeitintervall von der Erzeugung der Instanz an und das Ersetzen des dritten Status durch einen vierten Status (448), nachdem das zweite Zeitintervall abgelaufen ist, umfasst,
wobei,
- wenn die Instanz (446) erzeugt wurde und wenn die Instanz den dritten Status aufweist, das zweite Zeitintervall als Reaktion auf eine Anforderung einer Vorberechnung des Index des kleinsten gemeinsamen Vorfahren inkrementiert wird,
- andernfalls, wenn ein Index (422) des kleinsten gemeinsamen Vorfahren, der den ersten Status aufweist, in gemeinsam benutztem Speicher (414) gespeichert ist, ein Statusübergang von dem ersten Status zu dem zweiten Status durchgeführt und der Index (444) des kleinsten gemeinsamen Vorfahren zeitgestempelt wird,
- andernfalls, wenn die Instanz (448) erzeugt wurde und wenn die Instanz den vierten Status aufweist, die Vorberechnung für den neuen Index des kleinsten gemeinsamen Vorfahren dieser Instanz (448) abgebrochen und diese Instanz aus gemeinsam benutztem Speicher gelöscht wird,
- andernfalls eine neue Instanz (446) zur Berechnung des neuen Index des kleinsten gemeinsamen Vorfahren erzeugt wird, wobei die neue Instanz den dritten Status aufweist, nachdem das zweite Zeitintervall abgelaufen ist, der Status der Instanz von dem dritten Status in den vierten Status überführt wird und die Vorberechnung des neuen Index des kleinsten gemeinsamen Vorfahren gestartet wird und nach dem Abschluss der Vorberechnung der Status des Index des kleinsten gemeinsamen Vorfahren von dem vierten Status in den ersten Status überführt wird, so dass die Instanz der neue Index (422) des kleinsten gemeinsamen Vorfahren wird, der den ersten Status aufweist.

2. Datenverarbeitungssystem nach Anspruch 1, wobei die zweiten Speichermittel gemeinsam benutzter Speicher sind.

3. Datenverarbeitungssystem nach Anspruch 1 oder 2, ferner mit Mitteln zur Berechnung (120; 420) eines Index (122; 422, 444, 446, 448) des kleinsten gemeinsamen Vorfahren, wobei die Mittel zum Bestimmen eines kleinsten gemeinsamen Vorfahren dafür ausgelegt sind, den Index des kleinsten gemeinsamen Vorfahren zu benutzen.

4. Datenverarbeitungssystem nach einem der vorhergehenden Ansprüche, wobei der Graph Knoten (1, 2, 3, 4, 5, 6, 7, 8, 9) umfasst, die Organisationsentitäten repräsentieren.

5. Datenverarbeitungssystem nach einem der vorhergehenden Ansprüche, das ferner dritte Daten (442) umfasst, die eine Vergabe eines Individuums an den zweiten Knoten des Graphen beschreiben, wobei die Zugangsanforderung das Individuum zur Spezifikation des zweiten Knotens angibt.

6. Datenverarbeitungssystem nach einem der vorhergehenden Ansprüche, wobei der Graph ein Baum ist.

7. Verfahren zum Durchführen einer Autorisierungsprüfung für einen Benutzer, wobei der Benutzer an einen ersten Knoten eines gerichteten azyklischen Graphen (334) vergeben wird, wobei das Verfahren die folgenden Schritte umfasst:
- Vorberechnen eines Index (122; 422, 444, 446, 448) des kleinsten gemeinsamen Vorfahren,
- Empfangen einer Zugangsanforderung (130; 430) von dem Benutzer, wobei die Zugangsanforderung einen zweiten Knoten des Graphen spezifiziert,
- Bestimmen eines kleinsten gemeinsamen Vorfahren des ersten und zweiten Knotens unter Verwendung des vorberechneten Index des kleinsten gemeinsamen Vorfahren,
- Gewähren der Autorisierung, wenn der kleinste gemeinsame Vorfahre des ersten und zweiten Knotens der erste Knoten ist,
wobei die Vorberechnung des Index des kleinsten gemeinsamen Vorfahren als Reaktion auf Eintrag einer Modifikation des Graphen in die ersten Daten eingeleitet wird, wobei der Index des kleinsten gemeinsamen Vorfahren einen ersten Status (422) oder einen zweiten Status und einen Zeitstempel (444) aufweist, wobei der Index des kleinsten gemeinsamen Vorfahren verwendet wird, um den kleinsten gemeinsamen Vorfahren des ersten und zweiten Knotens zu bestimmen, wenn er den ersten Status aufweist, wobei andernfalls, wenn der Index des kleinsten gemeinsamen Vorfahren, der den ersten Status aufweist, nicht verfügbar ist, der Index des kleinsten gemeinsamen Vorfahren, der den zweiten Status aufweist, verwendet wird, wenn er verfügbar ist und wenn er nicht älter als ein vordefiniertes erstes Zeitintervall ist, wobei andernfalls eine Instanz (446, 448) eines neuen Index des kleinsten gemeinsamen Vorfahren zur Initialisierung der Vorberechnung des neuen Index des kleinsten gemeinsamen Vorfahren erzeugt wird, wobei der kleinste gemeinsame Vorfahre des ersten und zweiten Knotens durch eine Aufwärtsdurchquerung (450) des Graphen, bis die Vorberechnung des neuen Index des kleinsten gemeinsamen Vorfahren abgeschlossen ist, bestimmt wird, wobei das Verfahren ferner das Vergeben eines dritten Status an die Instanz (446) und das Starten der Vorberechnung nach einem vorbestimmten zweiten Zeitintervall von der Erzeugung der Instanz an und das Ersetzen des dritten Status durch einen vierten Status (448), nachdem das zweite Zeitintervall abgelaufen ist, umfasst,
wobei das Verfahren ferner Folgendes umfasst:
- wenn die Instanz (446) erzeugt wurde und wenn die Instanz den dritten Status aufweist, wird das zweite Zeitintervall als Reaktion auf eine Anforderung einer Vorberechnung des Index des kleinsten gemeinsamen Vorfahren inkrementiert,
- andernfalls, wenn ein Index (422) des kleinsten gemeinsamen Vorfahren, der den ersten Status aufweist, in gemeinsam benutztem Speicher (414) gespeichert ist, wird ein Statusübergang von dem ersten Status zu dem zweiten Status durchgeführt und der Index (444) des kleinsten gemeinsamen Vorfahren zeitgestempelt,
- andernfalls, wenn die Instanz (448) erzeugt wurde und wenn die Instanz den vierten Status aufweist, wird die Vorberechnung für den neuen Index des kleinsten gemeinsamen Vorfahren dieser Instanz (448) abgebrochen und diese Instanz aus gemeinsam benutztem Speicher gelöscht,
- andernfalls wird eine neue Instanz (446) zur Berechnung des neuen Index des kleinsten gemeinsamen Vorfahren erzeugt, wobei die neue Instanz den dritten Status aufweiset, nachdem das zweite Zeitintervall abgelaufen ist, der Status der Instanz von dem dritten Status in den vierten Status überführt wird und die Vorberechnung des neuen Index des kleinsten gemeinsamen Vorfahren gestartet wird und nach dem Abschluss der Vorberechnung der Status des Index des kleinsten gemeinsamen Vorfahren von dem vierten Status in den ersten Status überführt wird, so dass die Instanz der neue Index (422) des kleinsten gemeinsamen Vorfahren wird, der den ersten Status aufweist.

8. Verfahren nach Anspruch 7, wobei der Graph Knoten umfasst, die Organisationentitäten repräsentieren.

9. Verfahren nach Anspruch 7 oder 8, wobei die Zugangsanforderung eines von mehreren Individuen abgibt, ferner mit dem Schritt des Bestimmens des zweiten Knotens unter Verwendung einer vordefinierten Vergabe (442) des einen der Individuen an den zweiten Knoten.

10. Verfahren nach Anspruch 7, 8 oder 9, wobei die Vorberechnung des Index des kleinsten gemeinsamen Vorfahren als Reaktion auf die Zugangsanforderung eingeleitet wird.

11. Verfahren nach einem der vorhergehenden Ansprüche 7 bis 10, wobei Vorberechnung eines neuen Index (422) des kleinsten gemeinsamen Vorfahren aufgrund eines Eintrags einer Änderung des Graphen eingeleitet wird und wobei ein veralteter vorberechneter Index (444) des kleinsten gemeinsamen Vorfahren während eines ersten Zeitintervalls weiter zur Bestimmung des kleinsten gemeinsamen Vorfahren des ersten und zweiten Knotens verwendet wird und wobei eine Instanz zur Vorberechnung des neuen Index des kleinsten gemeinsamen Vorfahren erzeugt wird, wobei Vorberechnung eines neuen Index des kleinsten gemeinsamen Vorfahren gestartet wird, nachdem ein zweites Zeitintervall von der Erzeugung der Instanz an abgelaufen ist.

12. Verfahren nach Anspruch 11, wobei der Eintrag eines nachfolgenden Eintrags einer Änderung des Graphen innerhalb des ersten Zeitintervalls eine Vergrößerung des zweiten Zeitintervalls verursacht.

13. Computerprogrammprodukt, das computerausführbare Anweisungen zum Durchführen eines Verfahrens gemäß einem der vorhergehenden Ansprüche 7 bis 12 umfasst.

## Revendications

1. système de traitement de données comprenant :
- de premiers moyens de stockage (102 ; 402) pour stocker des premières données (106 ; 406) descriptives d'au moins un graphe acyclique dirigé (334) et pour stocker des deuxièmes données (104 ; 404) descriptives d'une affectation d'un utilisateur à un premier noeud du graphe,
- de seconds moyens de stockage (114 ; 414) pour stocker un index du moindre ancêtre commun pré-calculé (122 ; 422, 444, 446, 448) du graphe,
- des moyens (110 ; 410) pour recevoir une demande d'accès (130 ; 430) de l'utilisateur, la, demande d'accès spécifiant un second noeud du graphe,
- des moyens (120, 122, 124 ; 420, 422, 424, 444, 446, 448, 450) pour déterminer un moindre ancêtre commun des premier et second noeuds du graphe,
- des moyens (124 ; 424) pour effectuer un contrôle d'autorisation étant adaptés pour accorder une autorisation pour la demande d'accès si le moindre ancêtre commun des premier et second noeuds est le premier noeud,
dans lequel le système de traitement de données est en outre adapté pour :
le pré-calcul de l'index du moindre ancêtre commun en réponse à l'entrée d'une modification du graphe dans les premières données, dans lequel l'index du moindre ancêtre commun a un premier état (422) ou un deuxième état et un horodatage (444), dans lequel l'index du moindre ancêtre commun est utilisé pour déterminer le moindre ancêtre commun des premier et second noeuds s'il a le premier état, autrement lorsque l'index du moindre ancêtre commun ayant le premier état n'est pas disponible, l'index du moindre ancêtre commun ayant le second état est utilisé, si disponible, et s'il n'est pas plus ancien qu'un premier intervalle de temps prédéfini, autrement une instance (446, 448) d'un nouvel index du moindre ancêtre commun est générer pour une initialisation du pré-calcul du nouvel index du moindre ancêtre commun, dans lequel le moindre ancêtre commun des premier et second noeuds est détermine par une parcours vers le haut (450) du graphe, jusqu'à ce que le pré-calcul du nouvel index du moindre ancêtre commun soit terminé, le procédé comprenant en outre l'affectation d'un troisième état à l'instance (446) et le lancement du pré-calcul après un second intervalle de temps prédétermine à partir de la génération de l'instance et le remplacement du troisième état par un quatrième état (448) après que le second intervalle de temps se soit écroulé,
dans lequel :
- si l'instance (446) a été générée et si l'instance a la troisième état, incrémenter le second intervalle de temps en réponse à une demande d'un pré-calcul d'index du moindre ancêtre commun,
- sinon, si un index du moindre ancêtre commun (422) ayant le premier étant est stocké dans une mémoire partagée (414), effectuer un changement d'état du premier état au deuxième état et horodater l'index du moindre ancêtre commun (444),
- sinon, si l'instance (448) a été générée et si l'instance a le quatrième état, abandonner le pré-calcul pour le nouvel index du moindre ancêtre commun de cette instance (448) et supprimer cette instance de la mémoire partagée,
- sinon, générer une nouvelle instance (446) pour un calcul du nouvel index du moindre ancêtre commun, la nouvelle instance ayant le troisième état, changer l'état de l'instance du troisième état au quatrième état après que le second intervalle de temps se soit écoulé et lancer le pré-calcul du nouvel index du moindre ancêtre commue, changer l'état de l'index du moindre ancêtre commun après l'achèvement du pré-calcul du quatrième état au premier état de sorte que l'instance devient le nouvel index du moindre ancêtre commun (442) ayant le premier état.

2. Système de traitement de données selon la revendication 1, les seconds moyens de stockage étant une mémoire partagée.

3. Système de traitement de données selon la revendication 1 ou 2 comprenant en outre des moyens de calcul (120 ; 420) d'un index du moindre ancêtre commun (122 ; 422, 444, 446, 448), les moyens pour déterminer un moindre ancêtre commun étant adaptés pour utiliser l'index du moindre ancêtre commun.

4. Système de traitement de données selon l'une quelconque des revendications précédentes, dans lequel le graphe comprend des noeuds (1, 2, 3, 4, 5, 6, 7, 8, 9) représentatifs d'entités organisationnelles.

5. Système de traitement de données selon l'une quelconque des revendications précédentes, comprenant en outre des troisièmes données (442) descriptives d'une affectation d'un individu au second noeud du graphe, la demande d'accès étant indicative de l'individu pour la spécification du second noeud.

6. Système de traitement de données selon l'une quelconque des revendications précédentes, le graphe étant un arbre.

7. Procédé pour mettre en oeuvre un contrôle d'autorisation pour un utilisateur, l'utilisateur étant affecté à un premier noeud d'un graphe acyclique dirigé (334), le procède comprenant :
- pré-calculer un index du moindre ancêtre commun (122 ; 422, 444, 446 448),
- recevoir une demande d'accès (130 ; 430) de l'utilisateur, la demande d'accès spécifiant un second noeud du graphe,
- déterminer un moindre ancêtre commun des premier et second noeuds en utilisant l'index du moindre ancêtre commun pré-calculé,
- accorder l'autorisation si le moindre ancêtre commun des premier et second noeuds est le premier noeud,
dans lequel le pré-calcul de 1'index du moindre ancêtre commun est initialisé en réponse à l'entrée d'une modification du graphe dans les premières données, dans lequel l'index du moindre ancêtre commun a un premier état (422) ou un deuxième état et un horodatage (444), dans lequel l'index du moindre ancêtre commun est utilisé pour déterminer le moindre ancêtre commun des premier et second noeuds s'il a le premier état, autrement lorsque l'index du moindre ancêtre commun ayant le premier état n'est pas disponible, l'index du moindre ancêtre commun ayant le deuxième état est utilisé, si disponible, et s'il n'est pas plus ancien qu'un premier intervalle de temps prédéfini, autrement une instance (446, 448) d'un nouvel index du moindre ancêtre commun est généré pour une initialisation du pré-calcul du nouvel index du moindre ancêtre commun, dans lequel le moindre ancêtre commun des premier et second noeuds est détermine par un parcours vers le haut (450) du graphe jusqu'à ce que le pré-calcul du nouvel index du moindre ancêtre commun soit terminé, le procédé comprenant en outre d'affecter un troisième état à l'instance (446) et de démarrer le pré-calcul après un second intervalle de temps prédéterminé à partir de la vénération de l'instance et de remplacer le troisième état par un quatrième état (448) après que le second intervalle de temps se soit écoulé,
le procédé comprenant en outrer :
- si l'instance (446) a été générée et si l'instance a le troisième état, incrémenter le second intervalle de temps en réponse à une demande d'un pré-calcul d'index du moindre ancêtre commun,
- sinon, si au moins un index du moindre ancêtre commun (422) ayant le premier état est stocké dans une mémoire partagée (414), effectuer un changement d'état du premier état au deuxième état et horodater l'index du moindre ancêtre commun (444),
- sinon, si l'instance (448) a été générée et si l'instance a le quatrième état, abandonner le pré-calcul pour le nouvel index du moindre ancêtre commun de cette instance (448) et supprimer cette instance de la mémoire partagée,
- sinon, générer une nouvelle instance (446) pour un calcul du nouvel index du moindre ancêtre commun, la nouvelle instance ayant le troisième état, changer l'état de l'instance du troisième état au quatrième état après que le second intervalle de temps se soit écroulé et lancer le pré-calcul du nouvel index du moindre ancêtre commun, changer l'état de l'index du moindre ancêtre commue après l'achèvement du pré-calcul du quatrième état au premier état de sorte que l'instance devienne le nouvel index du moindre ancêtre commun (422) ayant le premier état.

8. Procédé selon la revendication 7, le graphe comprenant des noeuds représentatifs d'entités organisationnelles.

9. procédé selon la revendication 7 ou 8, la demande d'accès indiquant un parmi une pluralité d'individus, comprenant en outre de déterminer le second noeud en utilisant une affectation prédéfinie (442) de l'un des individus au second noeud.

10. Procédé selon les revendications 7, 8 ou 9, dans lequel le pré-calcul de l'index du moindre ancêtre commun est initialisé en réponse à la demande d'accès.

11. Procédé selon l'une quelconque des revendications 7 à 10 précédentes, dans lequel le pré-calcul d'un nouvel index du moindre ancêtre commun (422) est initialisé à cause de l'entrée d'un changement du graphe, et dans lequel un index du moindre ancêtre commun pré-calculé périmé (444) continue à être utilisé pour la détermination du moindre ancêtre commun des premier et second noeuds pendent un premier intervalle de temps, et dans lequel une instance de pré-calcul du nouvel index du moindre ancêtre commun est générée, dans lequel le pré-calcul du nouvel index du moindre ancêtre commun est lancé après qu'un second intervalle de temps se soit écoulé depuis la création de l'instance.

12. procédé selon la revendication 11, dans lequel l'entrée d'une entrée ultérieure d'un changement du graphe sur le premier intervalle de temps entraîne une augmentation du second intervalle de temps.

13. Produit de programme informatique comprenant des instructions exécutables sur ordinateur pour mettre en oeuvre un procédé selon l'une quelconque des revendications 7 à 12 précédentes.
